# EUROPÄISCHE PATENTSCHRIFT

(11) **EP 2 659 113 B1**
(45) Veröffentlichungstag und Bekanntmachung des Hinweises auf die Patenterteilung: **16.09.2015**
(21) Anmeldenummer: 11781512.6
(22) Anmeldetag: 07.11.2011
(51) Int. Cl.: F02D 19/06, F02D 41/00, F02M 37/00, F02M 35/10, F02M 69/04, F02M 35/108, F02M 69/52, F02D 41/06, F02D 41/10, F02M 43/00, F02M 21/00

(54) **EINSPRITZVORRICHTUNG, BRENNKRAFTMASCHINE UND VERFAHREN ZUM BETRIEB EINER EINSPRITZVORRICHTUNG FÜR BENZIN UND CNG**
INJECTION DEVICE, INTERNAL COMBUSTION ENGINE AND METHOD FOR OPERATING AN INJECTION DEVICE FOR GASOLINE AND CNG
DISPOSITIF D'INJECTION, MOTEUR À COMBUSTION INTERNE ET PROCÉDÉ PERMETTANT DE FAIRE FONCTIONNER UN DISPOSITIF D'INJECTION POUR L'ESSENCE ET LE GNC

(30) Priorität: 27.12.2010 DE 102010064166
(43) Veröffentlichungstag der Anmeldung: 06.11.2013
(73) Patentinhaber: Robert Bosch GmbH, 70442 Stuttgart (DE)
(72) Erfinder: POSSELT, Andreas, 75417 Muehlacker (DE); LORENZ, Marko, 71723 Grossbottwar (DE); GUTSCHER, Andreas, 71706 Markgroeningen (DE)
(86) Internationale Anmeldenummer: PCT/EP2011/069498
(87) Internationale Veröffentlichungsnummer: WO 2012/089382

(56) Entgegenhaltungen:
- EP-A2- 2 000 663
- JP-A- 2006 342 689
- JP-A- 2007 262 996
- US-A- 5 228 423
- US-A1- 2004 139 944

## Beschreibung

### Stand der Technik

Die Erfindung geht aus von einer Einspritzvorrichtung nach dem Oberbegriff des Anspruchs 1.

Solche Einspritzvorrichtungen für Brennkraftmaschinen sind allgemein bekannt. Beispielsweise ist aus der Druckschrift DE 10 2008 043 930 A1 eine Kraftstoff-Einspritzanlage für eine Brennkraftmaschine bekannt, die für die Verwendung von zwei oder mehr verschiedenen Kraftstoffen ausgebildet ist, wobei die Einspritzanlage Kraftstoff-Einspritzventile aufweist, welche wahlweise mit verschiedenen Kraftstoffbehältern verbindbar sind. Insbesondere ist vorgesehen, dass die gleichen Kraftstoff-Einspritzventile sowohl zur Einspritzung von Benzin, als auch zur Einspeisung von Gas, wie komprimiertem Erdgas (CNG, Compressed Natural Gas) und Flüssiggas (LNG, Liquefied Natural Gas) verwendet werden. Nachteilig an dieser Einspritzvorrichtung ist, dass bei der Einspritzung von auf Benzin basierenden Kraftstoffen unterschiedliche Durchflussmengen benötigt werden, als bei der Einspeisung von auf Gas basierenden Kraftstoffen. Der Kraftstoffzumessbereich eines Kraftstoff-Einspritzventils, d.h. derjenige Bereich, in welchem mit einer bestimmten Genauigkeit Kraftstoff einspritzbar ist, ist jedoch begrenzt.

Eine solche Vorrichtung ist auch aus der JP 2006-342689 bekannt.

### Offenbarung der Erfindung

Die erfindungsgemäße Einspritzvorrichtung, die erfindungsgemäße Brennkraftmaschine und das erfindungsgemäße Verfahren zum Betrieb einer Einspritzvorrichtung gemäß den nebengeordneten Ansprüchen haben gegenüber dem Stand der Technik den Vorteil, dass einerseits eine Verringerung der Abgasemissionen und andererseits eine Erhöhung der Leistung der Brennkraftmaschine erzielt wird. Dies wird dadurch erzielt, dass der Kraftstoff der ersten Kraftstoffzusammensetzung, dessen Hauptbestandteil vorzugsweise Erdgas ist, ausschließlich durch die erste Einspritzanordnung eingespritzt wird, während der Kraftstoff der zweiten Kraftstoffzusammensetzungen, dessen Hauptbestandteil vorzugsweise Benzin ist, ausschließlich durch die zwei separate Einspritzventile aufweisende zweite Einspritzanordnung eingespritzt wird. Es hat sich gezeigt, dass ein besonderes abgasarmer Betrieb der Brennkraftmaschine erzielt wird, wenn beim Starten und im Niedriglastbereich der Brennkraftanlage ein Betrieb mit Kraftstoff der zweiten Kraftstoffzusammensetzung und bei erhöhter Last bzw. Volllast ein Betrieb mit Kraftstoff der ersten Kraftstoffzusammensetzung erfolgt. Beim Betreiben der Brennkraftmaschine mit einem auf Erdgas basierenden Kraftstoff muss im Vergleich zum Betrieb mit dem Benzin basiertem Kraftstoff wesentlich mehr Kraftstoff durch das jeweilige Einspritzventil gefördert werden, so dass die Anforderungen an den verfügbaren Durchflussmengenbereich der Einspritzvorrichtung vergleichsweise hoch sind. Durch die Trennung der Einspritzventile in solche, die ausschließlich den auf Erdgas basierenden Kraftstoff einspritzen, und in solche, die ausschließlich den auf Benzin basierenden Kraftstoff einspritzen, werden in einfacher Weise die hohen Anforderungen an den verfügbaren Durchflussmengenbereich des jeweiligen Einspritzventils erreicht. Die Einspritzung von auf Benzin basierendem Kraftstoff wird insbesondere in der Start- und Warmlaufphase benötigt, da eine Einspritzung von auf Erdgas basierendem Kraftstoff zum Starten des Motors vergleichsweise ineffizient ist. Die zweite Einspritzvorrichtung wird daher gerade in der Start- und Warmlaufphase betrieben und bei Volllast vorzugsweise gedrosselt oder ganz abgeschaltet. Durch die Verwendung zweier separater Einspritzventile, das zweite und dritte Einspritzventil, wird nun gerade in der Start- und Warmlaufphase eine homogene und stabile Durchbrennung des eingespritzten Kraftstoffs begünstigt, da jedes Einspritzventil nur eine verminderte Durchflussmenge von Kraftstoff der zweiten Kraftstoffzusammensetzung einzuspritzen braucht, wodurch eine geringere Spraydichte erzielt wird, d.h. dass sich die charakteristische Tröpfchengröße, insbesondere der Sauter-Durchmesser, des zerstäubten Kraftstoffs in vorteilhafter Weise verringert, wodurch eine schnellere und stabilere Durchbrennung des Kraftstoffgemischs im Brennraum erzielt wird. Weiterer Vorteil sind die beiden voneinander getrennten Abspritzpunkte der zweiten Einspritzanordnung, dieser Freiheitsgrad ermöglicht optimales einspritzen von Kraftstoff mit minimierter Wandbenetzung. Auf diese Weise werden Mängel im Verbrennungsverlauf, Zündaussetzer oder eine unvollständige Verbrennung des Kraftstoffgemischs vermieden und eine Reduktion der Rohabgase erzielt. Insbesondere in der Start- und Warmlaufphase, d.h. bei einem kalten, noch nicht (vollständig) konvertierenden Katalysator führt dies zu einer Verringerung der Abgasemissionen am Katalysatorausgang. Die bessere Durchbrennung des Kraftstoffgemischs im Brennraum führt ferner zu einem späteren Zündwinkel bei gleicher Laufunruhe, was ferner zu einer erhöhten Temperatur im Brennraum und somit auch zu heißeren Rohabgasen führt. Hierdurch wird in der Start- und Warmlaufphase der Katalysator schneller aufgewärmt und erreicht schneller die Anspringtemperatur, ab welcher der Katalysator effizient arbeitet. Durch die Verwendung der zwei separaten Einspritzventile fallen somit insgesamt deutlich weniger Rohabgase in der Start- und Warmlaufphase an. Vorteilhafterweise kann aufgrund der Rohabgasreduktion der Katalysator kleiner dimensioniert und ein Teil der für den Katalysator benötigten Edelmetalle eingespart werden. Die verbesserte Durchbrennung und die hierdurch erzielte höhere Laufruhe ermöglicht darüber hinaus eine geringere Leerlaufdrehzahl, welche wiederum die Abgasemissionen beim Betrieb mit Kraftstoff der zweiten Kraftstoffzusammensetzung reduziert. Bei hoher Last wird die zweite Einspritzanordnung gedrosselt und/oder abgeschaltet und die Brennkraftmaschine wird mit dem auf Erdgas basierendem Kraftstoff gespeist, wodurch eine vergleichsweise hohe Leistung bei niedrigen Abgasemissionen und niedrigem Kraftstoffverbrauch erreicht wird. Durch geringere Verunreinigungen verbrennt Erdgas im Vergleich zu Benzin generell sauberer und erzeugt somit weniger Abgase. Im Last- und Volllastbetrieb wird somit eine erhebliche Abgasreduktion erzielt. Die erfindungsgemäße Brennkraftmaschine umfasst vorzugsweise einen Ottomotor mit Saugrohreinspritzung für ein Kraftfahrzeug, vorzugsweise ein Automobil. Die Brennkraftmaschine umfasst vorzugsweise mehr als einen Zylinder.

Vorteilhafte Ausgestaltungen und Weiterbildungen der Erfindung sind den Unteransprüchen, sowie der Beschreibung unter Bezugnahme auf die Zeichnungen entnehmbar.

Gemäß der Erfindung ist vorgesehen, dass das zweite und dritte Einspritzventil in einem zum Brennraum führenden Ansaugrohr angeordnet sind, wobei das zweite und dritte Einspritzventil in einem dem Brennraum zugewandten unteren Wandungsabschnitt des Ansaugrohres angeordnet sind. Eine Anordnung im unteren Wandungsabschnitt liegt vorteilhafterweise strömungsgünstiger hinsichtlich aus dem Brennraum rückströmender Abgase, so dass das Risiko eines Verstopfens des zweiten und dritten Einspritzventils vermindert wird.

Gemäß der Erfindung ist vorgesehen, dass das erste Einspritzventil im Ansaugrohr angeordnet ist, wobei das erste Einspritzventil vorzugsweise in einem dem Brennraum abgewandten oberen Wandungsabschnitt des Ansaugrohres angeordnet ist. In vorteilhafter Weise ist somit eine besonders bauraumkompakte Ausbildung der Einspritzvorrichtung möglich, da das erste Einspritzventil auf der dem zweiten und dritten Einspritzventil gegenüberliegenden Wandung des Ansaugrohrs angeordnet ist.

Gemäß einer bevorzugten Ausführungsform ist vorgesehen, dass das Ansaugrohr zwischen der zweiten Einspritzanordnung und dem Brennraum mittels einer inneren Trennwand in einen in die erste Einlassöffnung mündenden ersten Ansaugkanal und einen in die zweite Einlassöffnung mündenden zweiten Ansaugkanal separiert ist, wobei das zweite Einspritzventil im Bereich des ersten Ansaugkanals und das dritte Einspritzventil im Bereich des zweiten Ansaugkanals angeordnet ist. In vorteilhafter Weise sind das zweite und dritte Einspritzventil ferner getrennt voneinander angeordnet und insbesondere auch getrennt voneinander ansteuerbar. Es ist auch denkbar, dass jeweils nur eines der beiden Einspritzventile angesteuert wird.

Gemäß einer bevorzugten Ausführungsform ist vorgesehen, dass der Abstand zwischen dem zweiten Einspritzventil und der ersten Einlassöffnung und der Abstand zwischen dem dritten Einspritzventil und der zweiten Einlassöffnung jeweils kleiner als der Abstand zwischen dem ersten Einspritzventil und der ersten oder zweiten Einlassöffnung sind. Der Abstand zwischen der zweiten Einspritzanordnung und dem Brennraum ist vergleichsweise klein gewählt, so dass sich die Flugzeiten des eingespritzten Kraftstoffs gemäß der zweiten Kraftstoffzusammensetzung verkürzen. Die Verdampfung des auf Benzin basierenden Kraftstoffs findet somit im Brennraum statt, wodurch der Brennraum gekühlt wird. Die Klopffestigkeit nimmt daher zu, so dass insbesondere in einer Volllastphase größere Leistungen abgefragt werden können. Diese Ausführungsform eignet sich daher zum Bau einer besonders leistungsfähigen Brennkraftmaschine.

Gemäß einer alternativen bevorzugten Ausführungsform ist vorgesehen, dass der Abstand zwischen dem zweiten Einlassventil und der ersten Einlassöffnung und der Abstand zwischen dem dritten Einlassventil und der zweiten Einlassöffnung jeweils größer als zwischen dem ersten Einlassventil und der ersten oder zweiten Einlassöffnung sind. Auf diese Weise ist der Abstand zwischen der zweiten Einspritzanordnung und dem Brennraum vergleichsweise groß, so dass sich die Flugzeiten des eingespritzten Kraftstoffs gemäß der zweiten Kraftstoffzusammensetzung vergrößern. Dies hat den Vorteil, dass schon im Saugrohr eine effiziente Verdampfung der Tröpfchen einsetzt und so im Brennraum eine vergleichsweise stabile und heiße Verbrennung erzielt wird. Hierdurch wird insbesondere in der Start- und Wärmphase eine verbesserter Zündfähigkeit, sowie ein schnelleres Aufwärmen des Katalysators erzielt. Die Abgasemissionen werden somit verringert. Diese Ausführungsform eignet sich daher zum Bau einer besonders emissionsarmen Brennkraftmaschine.

Gemäß einer bevorzugten Ausführungsform ist vorgesehen, dass das zweite und dritte Einspritzventil jeweils nur eine einzige Einspritzöffnung zum Einspritzen des Kraftstoffs der zweiten Kraftstoffzusammensetzung aufweisen und/oder dass das zweite und dritte Einspritzventil jeweils für einen niedrigeren Kraftstoffdurchflussbereich als das wenigstens eine erste Einspritzventil dimensioniert sind. Der Kraftstoffzumessbereich kann somit vorteilhafterweise für jede der beiden verschiedenen Kraftstoffzusammensetzungen optimiert werden. Das erste Einspritzventil weist alternativ entweder eine einzige erste Einspritzöffnung oder wenigstens zwei separate erste Einspritzöffnungen zum Einspritzen des auf Erdgas basierenden Kraftstoffs in Richtung der ersten und zweiten Einlassöffnung auf. Alternativ ist natürlich auch denkbar, dass die erste Einspritzanordnung zwei oder mehr erste Einspritzventile umfasst, welche insbesondere jeweils nur eine erste Einspritzöffnung aufweisen und welche im Ansaugrohr oder im ersten und zweiten Ansaugkanal angeordnet sind.

Gemäß einer bevorzugten Ausführungsform ist vorgesehen, dass das zweite und das dritte Einspritzventil derart unterschiedlich dimensioniert sind, dass unterschiedliche Mengen von Kraftstoff der zweiten Kraftstoffzusammensetzung durch das zweite und dritte Einspritzventil eingespritzt werden. Auf diese Weise kann der Kraftstoffzumessbereich erheblich vergrößert werden, beispielsweise wenn nur dasjenige der beiden Einspritzventile angesteuert wird, welches für eine kleinere Durchflussmenge dimensioniert ist.

Ein weiterer Gegenstand der vorliegenden Erfindung ist eine Brennkraftmaschine aufweisend eine erfindungsgemäße Einspritzvorrichtung.

Ein weiterer Gegenstand der vorliegenden Erfindung ist Verfahren zum Betrieb einer Einspritzvorrichtung, wobei mittels des ersten Einspritzventils Kraftstoff der auf Erdgas basierenden ersten Kraftstoffzusammensetzung sowohl in Richtung der ersten Einlassöffnung, als auch in Richtung der zweiten Einlassöffnung eingespritzt wird und wobei mittels des zweiten Einspritzventils Kraftstoff der auf Benzin basierenden zweiten Kraftstoffzusammensetzung im Wesentlichen nur in Richtung der ersten Einlassöffnung und mittels des dritten Einspritzventils Kraftstoff der zweiten Kraftstoffzusammensetzung im Wesentlichen nur in Richtung der zweiten Einlassöffnung eingespritzt wird. In vorteilhafter Weise werden somit die oben genannten Vorteile der Abgasreduktion, sowie der Leistungssteigerung erzielt. Auf diese Weise wird ein maximal großer verfügbarer Durchflussmengenbereich zur präzisen Einspritzung der jeweils benötigten Kraftstoffmengen erreicht wird.

Gemäß einer bevorzugten Ausführungsform ist vorgesehen, dass mit dem wenigstens einem ersten Einspritzventil ausschließlich Kraftstoff der ersten Kraftstoffzusammensetzung eingespritzt wird und dass mit dem zweiten und dritten Einspritzventil jeweils ausschließlich Kraftstoff der zweiten Kraftstoffzusammensetzung eingespritzt wird.

Gemäß einer bevorzugten Ausführungsform ist vorgesehen, dass in einer Startphase der Brennkraftmaschine hauptsächlich Kraftstoff der zweiten Zusammensetzung durch das zweite und dritte Einspritzventil eingespritzt wird und dass in einer Lastphase der Brennkraftmaschine hauptsächlich Kraftstoff der ersten Zusammensetzung durch das erste Einspritzventil eingespritzt wird. Auf diese Weise werden die Kraftstoffe der unterschiedlichen Zusammensetzungen für die jeweiligen Anforderungen mit maximaler Effizienz eingesetzt.

Ausführungsbeispiele der vorliegenden Erfindung sind in den Zeichnungen dargestellt und in der nachfolgenden Beschreibung näher erläutert.

### Kurze Beschreibung der Zeichnungen

Es zeigen
**Figur 1** zeigt eine schematische Aufsichtsdarstellung einer Brennkraftmaschine mit einer Einspritzvorrichtung gemäß einer ersten Ausführungsform der vorliegenden Erfindung und
**Figur 2** eine schematische Schnittbilddarstellung einer Brennkraftmaschine mit einer Einspritzvorrichtung gemäß einer zweiten Ausführungsform der vorliegenden Erfindung und
**Figur 3** zeigt eine schematische Aufsichtsdarstellung einer Einspritzvorrichtung gemäß der zweiten Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

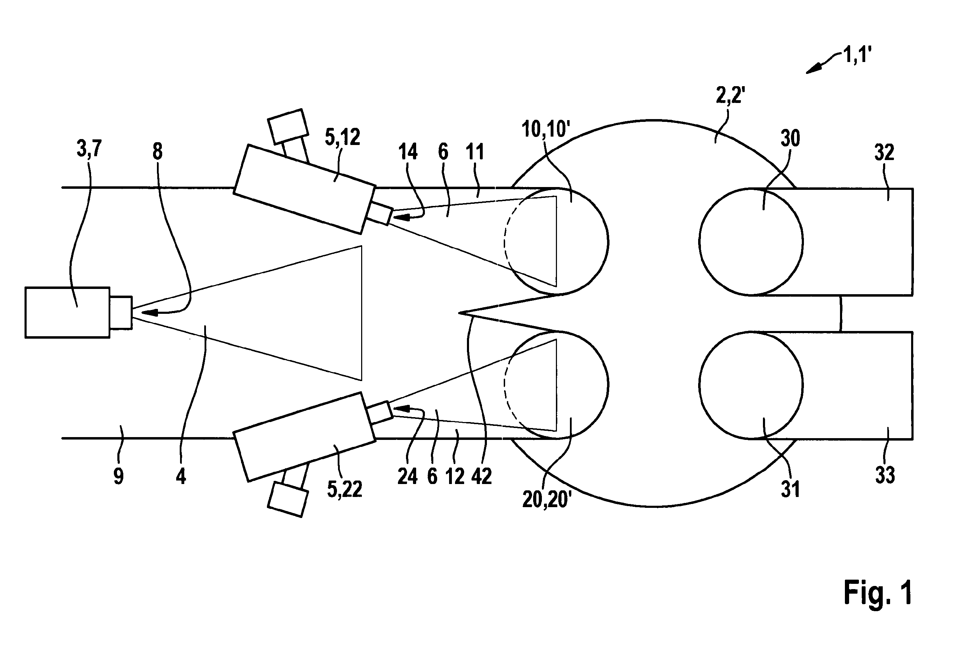

In **Figur 1** ist eine schematische Aufsichtsdarstellung einer Brennkraftmaschine 1 mit einer Einspritzvorrichtung 1' gemäß einer ersten Ausführungsform der vorliegenden Erfindung dargestellt, welche einen Zylinder aufweist, welcher einen Brennraum 2 umfasst und in welchem sich ein Kolben 2' bewegt. Die Wandung des Brennraums 2 weist eine erste und eine zweite Einlassöffnung 10, 20 auf, durch welche jeweils ein Luft-Kraftstoff-Gemisch in die Brennkammer 2 angesaugt wird und eine erste und zweite Auslassöffnung 30, 31, durch welche die Rohabgase des verbrannten Luft-Kraftstoff-Gemischs aus der Brennkammer 2 in erste und zweite Auslasskanäle 32, 33 ausgestoßen werden. Die Brennkraftmaschine 1 weist ein erstes Einlassventil 10' auf, welches zum Verschließen der ersten Einlassöffnung 10 vorgesehen ist und zwischen einem ersten Ansaugkanal 11 und der Brennkammer 2 angeordnet ist. Die Brennkraftmaschine 1 weist ferner ein zweites Einlassventil 20' auf, welches zum Verschließen der zweiten Einlassöffnung 20 vorgesehen ist und zwischen einem zweiten Ansaugkanal 21 und der Brennkammer 2 angeordnet ist. Der erste und der zweite Ansaugkanal 11, 21 münden auf einer der Brennkammer 2 abgewandten Seite in ein gemeinsames Ansaugrohr 9, wobei durch eine im Ansaugrohr 9 angeordnete Drosselklappe (nicht dargestellt) eine dosierte Menge Frischluft durch das Ansaugrohr 9 in Richtung der Brennkammer 2 angesaugt wird. Der erste und zweiten Ansaugkanals 11, 21 werden im Wesentlichen durch eine im Ansaugrohr 9 angeordnete Trennwand 42 voneinander separiert. Die Einspritzvorrichtung 1' weist eine erste und eine zweite Einspritzanordnung 3, 5 auf, welche zum Einspritzen von Kraftstoff 4, 6 in Richtung der ersten und zweiten Einlassöffnungen 10, 20 bzw. in den ersten und zweiten Ansaugkanal 11, 21 vorgesehen sind. Die erste Einspritzanordnung 3 umfasst ein erstes Einspritzventil 7, welches wenigstens eine Einspritzöffnung 8 umfasst, durch welche Kraftstoff 4 einer ersten Kraftstoffzusammensetzung sowohl in Richtung der ersten, als auch in Richtung der zweiten Einlassöffnung 10, 20 eingespritzt wird. Die erste Kraftstoffzusammensetzung besteht hauptsächlich aus Erdgas, welches im (Voll-)Lastbetrieb der Brennkraftmaschine 1 eine vergleichsweise saubere Verbrennung, d.h. mit niedrigen Emissionen und hoher Leistung, gewährleistet. Da die Start- und Aufwärmphase mit einem auf Erdgas basierendem Kraftstoff vergleichsweise ineffizient ist, weist die Einspritzvorrichtung 1' noch die zweite Einspritzanordnung 5 auf, welche zum Einspritzen von Kraftstoff 6 einer zweiten Kraftstoffzusammensetzung vorgesehen ist. Die zweite Kraftstoffzusammensetzung umfasst insbesondere herkömmliches Benzin. Die zweite Einspritzanordnung 5 weist ein zweites und ein separates drittes Einspritzventil 12, 22 auf. Das zweite Einspritzventil 12 weist eine einzige zweite Einspritzöffnung 14 auf, durch welche der Kraftstoff 6 der zweiten Kraftstoffzusammensetzung im Wesentlichen ausschließlich in Richtung der ersten Einlassöffnung 10 eingespritzt wird. Analog weist das dritte Einspritzventil 22 eine einzige dritte Einspritzöffnung 24 auf, durch welche der Kraftstoff 6 der zweiten Kraftstoffzusammensetzung im Wesentlichen ausschließlich in Richtung der zweiten Einlassöffnung 20 eingespritzt wird. Das erste, zweite und dritte Einspritzventil 7, 12, 22 sind getrennt voneinander ansteuerbar. Im vorliegenden Beispiel ist der Abstand zwischen dem zweiten Einlassventil 12 und der ersten Einlassöffnung 10, sowie zwischen dem dritten Einlassventil 22 und der zweiten Einlassöffnung 20 jeweils kleiner als zwischen dem ersten Einlassventil 7 und der ersten oder zweiten Einlassöffnung 10, 20. Das zweite und dritte Einspritzventil 12, 22 sind jeweils für einen niedrigeren Kraftstoffdurchflussbereich als das wenigstens eine erste Einspritzventil 7 dimensioniert, da beim Einspritzen von auf Erdgas basierendem Kraftstoff 4 im Vergleich zum Einspritzen von auf Benzin basierendem Kraftstoff 6 größere Mengen eingespritzt werden müssen. Das erste Einspritzventil 7 dient daher ausschließlich dem Einspritzen von Kraftstoff 4 der ersten Kraftstoffzusammensetzung, während von dem zweiten und dritten Einspritzventil 12, 22 jeweils ausschließlich Kraftstoff 6 der zweiten Kraftstoffzusammensetzung eingespritzt wird. Das Einspritzen von Kraftstoff 6 der zweiten Kraftstoffzusammensetzung erfolgt hauptsächlich in der Start- und Warmlaufphase der Brennkraftmaschine 1. Das Einspritzen von Kraftstoff 4 der ersten Kraftstoffzusammensetzung erfolgt hingegen hauptsächlich in der Last- und Volllastphase. Vorzugsweise wird durch eine geeignete Steuerung das erste, zweite und dritte Einspritzventil 7, 12, 22 in Abhängigkeit der entsprechenden Betriebsparameter gesteuert, so dass das Verhältnis zwischen der eingespritzten Menge des Kraftstoffs 4 der ersten Kraftstoffzusammensetzung und der eingespritzten Menge des Kraftstoffs 6 der zweiten Kraftstoffzusammensetzung bedarfsgerecht und insbesondere kontinuierlich geregelt wird, um möglichst niedrige Emissionen bei ausreichender Leistung zu erzielen. Die Brennkraftmaschine 1 weist vorzugsweise eine Mehrzahl von solchen Zylindern auf. Die Brennkraftmaschine 1 umfasst vorzugsweise einen Ottomotor für ein Automobil.

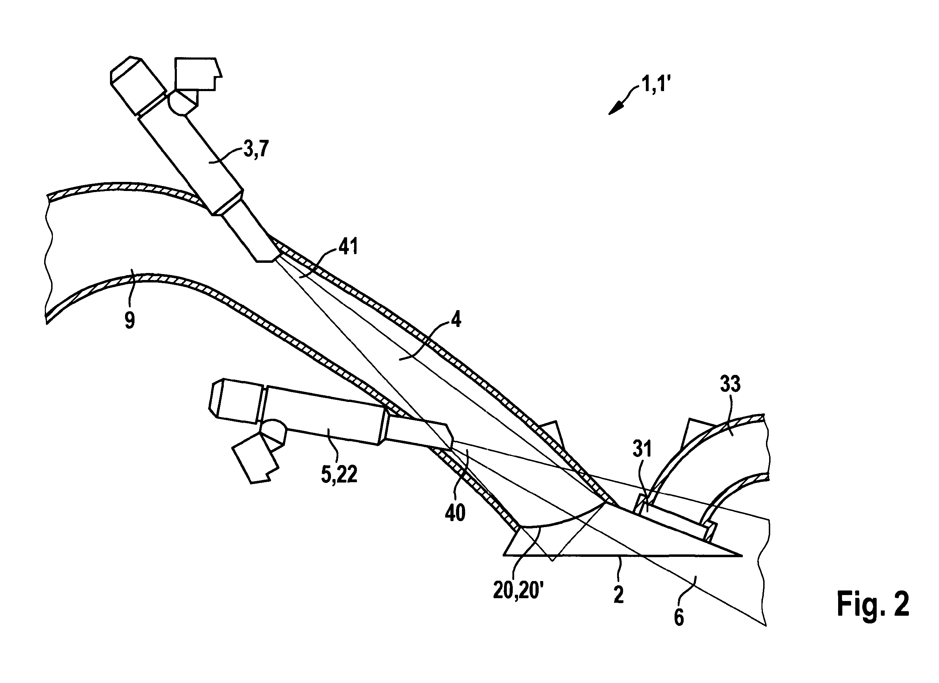

In **Figur 2** ist eine schematische Aufsichtsdarstellung einer Brennkraftmaschine 1 mit einer Einspritzvorrichtung 1' gemäß einer zweiten Ausführungsform der vorliegenden Erfindung dargestellt. Die zweite Ausführungsform gleicht im Wesentlichen der in Figur 1 illustrierten ersten Ausführungsform, wobei das zweite und dritte Einspritzventil 12, 22 im Bereich eines dem Brennraum 2 zugewandten unteren Wandungsabschnitt 40 des Ansaugrohres 9 angeordnet sind. Das erste Einspritzventil 7 ist hingegen in einem Bereich eines dem Brennraum 2 abgewandten oberen Wandungsabschnitt 41 des Ansaugrohres 9 angeordnet.

In **Figur 3** ist eine schematische Aufsichtsdarstellung der in Figur 2 illustrierten Einspritzvorrichtung 1' gemäß der zweiten Ausführungsform der vorliegenden Erfindung dargestellt.

## Patentansprüche

1. Einspritzvorrichtung (1') für eine Brennkraftmaschine (1) aufweisend eine erste Einspritzanordnung (3) zum Einspritzen eines Kraftstoffs (4) einer auf Erdgas basierenden ersten Kraftstoffzusammensetzung und eine zweite Einspritzanordnung (5) zum Einspritzen von Kraftstoff (6) einer auf Benzin basierenden zweiten Kraftstoffzusammensetzung, wobei die erste Einspritzanordnung (3) ein erstes Einspritzventil (7) zum Einspritzen von Kraftstoff (4) der ersten Kraftstoffzusammensetzung sowohl in Richtung einer ersten Einlassöffnung (10) eines Brennraums (2) der Brennkraftmaschine (1), als auch in Richtung einer zweiten Einlassöffnung (20) des Brennraums (2) aufweist, wobei die zweite Einspritzanordnung (5) ein zweites Einspritzventil (12) zum Einspritzen von Kraftstoff (6) der zweiten Kraftstoffzusammensetzung im Wesentlichen nur in Richtung der ersten Einlassöffnung (10) und ein separates drittes Einspritzventil (12) zum Einspritzen von Kraftstoff (6) der zweiten Kraftstoffzusammensetzung im Wesentlichen nur in Richtung der zweiten Einlassöffnung (20) aufweist,
**dadurch gekennzeichnet,**
**dass** beide Einlassöffnungen (20, 21) ein und demselben Brennraum (2) zugeordnet sind, und
**dass** das zweite und dritte Einspritzventil (12, 22) in einem zum Brennraum (2) führenden Ansaugrohr (9) und
in einem dem Brennraum (2) zugewandten unteren Wandungsabschnitt (40) des Ansaugrohres (9) angeordnet sind, und
**dass** das
erste Einspritzventil (7) in einem dem Brennraum (2) abgewandten oberen Wandungsabschnitt (41) des Ansaugrohres (9) angeordnet ist.

2. Einspritzvorrichtung (1') nach Anspruch 1, **dadurch gekennzeichnet, dass** das Ansaugrohr (9) zwischen der zweiten Einspritzanordnung (5) und dem Brennraum (2) mittels einer inneren Trennwand (42) in einen in die erste Einlassöffnung (10) mündenden ersten Ansaugkanal (11) und einen in die zweite Einlassöffnung (20) mündenden zweiten Ansaugkanal (21) separiert ist, wobei das zweite Einspritzventil (12) im Bereich des ersten Ansaugkanals (11) und das dritte Einspritzventil (22) im Bereich des zweiten Ansaugkanals (21) angeordnet ist.

3. Einspritzvorrichtung (1') nach einem der vorhergehenden Ansprüche, **dadurch gekennzeichnet, dass** der Abstand zwischen dem zweiten Einspritzventil (12) und der ersten Einlassöffnung (10) und der Abstand zwischen dem dritten Einspritzventil (22) und der zweiten Einlassöffnung (20) jeweils kleiner als der Abstand zwischen dem ersten Einspritzventil (7) und der ersten oder zweiten Einlassöffnung (10, 20) sind.

4. Einspritzvorrichtung (1') nach einem der vorhergehenden Ansprüche, **dadurch gekennzeichnet, dass** das zweite und dritte Einspritzventil (12, 22) jeweils nur eine einzige Einspritzöffnung (14, 24) zum Einspritzen des Kraftstoffs (6) der zweiten Kraftstoffzusammensetzung aufweisen und/oder dass das zweite und dritte Einspritzventil (12, 22) jeweils für einen niedrigeren Kraftstoffdurchflussbereich als das wenigstens eine erste Einspritzventil (7) dimensioniert sind.

5. Brennkraftmaschine (1) aufweisend eine Einspritzvorrichtung (1') nach einem der vorhergehenden Ansprüche.

6. Verfahren zum Betrieb einer Einspritzvorrichtung (1') nach einem der Ansprüche 1 bis 4, **dadurch gekennzeichnet, dass** mittels des ersten Einspritzventils (7) Kraftstoff (4) der auf Erdgas basierenden ersten Kraftstoffzusammensetzung sowohl in Richtung der ersten Einlassöffnung (10), als auch in Richtung der zweiten Einlassöffnung (20) eingespritzt wird und dass mittels des zweiten Einspritzventils (12) Kraftstoff (6) der auf Benzin basierenden zweiten Kraftstoffzusammensetzung im Wesentlichen nur in Richtung der ersten Einlassöffnung (10) und mittels des dritten Einspritzventils (22) Kraftstoff (6) der zweiten Kraftstoffzusammensetzung im Wesentlichen nur in Richtung der zweiten Einlassöffnung (20) eingespritzt werden.

7. Verfahren nach Anspruch 6, **dadurch gekennzeichnet, dass** mit dem wenigstens einem ersten Einspritzventil (7) ausschließlich Kraftstoff (4) der ersten Kraftstoffzusammensetzung eingespritzt wird und dass mit dem zweiten und dritten Einspritzventil (12, 22) jeweils ausschließlich Kraftstoff (6) der zweiten Kraftstoffzusammensetzung eingespritzt wird.

8. Verfahren nach einem der Ansprüche 6 oder 7, **dadurch gekennzeichnet, dass** in einer Startphase der Brennkraftmaschine (1) hauptsächlich Kraftstoff (6) der zweiten Zusammensetzung durch das zweite und dritte Einspritzventil (12, 22) eingespritzt wird und dass in einer Lastphase der Brennkraftmaschine (1) hauptsächlich Kraftstoff (4) der ersten Zusammensetzung durch das erste Einspritzventil (7) eingespritzt wird.

## Claims

1. Injection apparatus (1') for an internal combustion engine (1), having a first injection arrangement (3) for injecting a fuel (4) of a first, natural gas-based fuel composition and having a second injection arrangement (5) for injecting fuel (6) of a second, gasoline-based fuel composition, wherein the first injection arrangement (3) has a first injection valve (7) for injecting fuel (4) of the first fuel composition both in the direction of a first inlet opening (10) of a combustion chamber (2) of the internal combustion engine (1) and in the direction of a second inlet opening (20) of the combustion chamber (2), wherein the second injection arrangement (5) has a second injection valve (12) for injecting fuel (6) of the second fuel composition substantially only in the direction of the first inlet opening (10) and a separate, third injection valve (12) for injecting fuel (6) of the second fuel composition substantially only in the direction of the second inlet opening (20),
**characterized**
**in that** both inlet openings (20, 21) are assigned to one and the same combustion chamber (2), and
**in that** the second and third injection valves (12, 22) are arranged in an intake pipe (9) leading to the combustion chamber (2) and in a lower wall section (40), facing towards the combustion chamber (2), of the intake pipe (9), and
**in that** the first injection valve (7) is arranged in an upper wall section (41), facing away from the combustion chamber (2), of the intake pipe (9).

2. Injection apparatus (1') according to Claim 1, **characterized in that** the intake pipe (9) is, between the second injection arrangement (5) and the combustion chamber (2), separated by means of an inner partition (42) into a first intake duct (11), which issues into the first inlet opening (10), and a second intake duct (21), which issues into the second inlet opening (20), wherein the second injection valve (12) is arranged in the region of the first intake duct (11) and the third injection valve (22) is arranged in the region of the second intake duct (21).

3. Injection apparatus (1') according to one of the preceding claims, **characterized in that** the spacing between the second injection valve (12) and the first inlet opening (10) and the spacing between the third injection valve (22) and the second inlet opening (20) are each smaller than the spacing between the first injection valve (7) and the first or second inlet opening (10, 20).

4. Injection apparatus (1') according to one of the preceding claims, **characterized in that** the second and third injection valves (12, 22) each have only a single injection opening (14, 24) for injecting the fuel (6) of the second fuel composition, and/or **in that** the second and third injection valves (12, 22) are each dimensioned for a lower fuel throughflow range than the at least one first injection valve (7).

5. Internal combustion engine (1) having an injection apparatus (1') according to one of the preceding claims.

6. Method for operating an injection apparatus (1') according to one of Claims 1 to 4, **characterized in that**, by means of the first injection valve (7), fuel (4) of the first, natural gas-based fuel composition is injected both in the direction of the first inlet opening (10) and in the direction of the second inlet opening (20), and **in that**, by means of the second injection valve (12), fuel (6) of the second, gasoline-based fuel composition is injected substantially only in the direction of the first inlet opening (10), and, by means of the third injection valve (22), fuel (6) of the second fuel composition is injected substantially only in the direction of the second inlet opening (20).

7. Method according to Claim 6, **characterized in that** only fuel (4) of the first fuel composition is injected by means of the at least one first injection valve (7), and **in that** only fuel (6) of the second fuel composition is injected by means of each of the second and third injection valves (12, 22).

8. Method according to either of Claims 6 and 7, **characterized in that** primarily fuel (6) of the second composition is injected, by means of the second and third injection valves (12, 22), in a starting phase of the internal combustion engine (1), and **in that** primarily fuel (4) of the first composition is injected, by means of the first injection valve (7), in a load phase of the internal combustion engine (1).

## Revendications

1. Dispositif d'injection (1') pour un moteur à combustion interne (1) présentant un premier agencement d'injection (3) pour l'injection d'un carburant (4) d'une première composition de carburant à base de gaz naturel et un deuxième agencement d'injection (5) pour l'injection de carburant (6) d'une deuxième composition de carburant à base d'essence, le premier agencement d'injection (3) présentant une première soupape d'injection (7) pour l'injection de carburant (4) de la première composition de carburant à la fois dans la direction d'une première ouverture d'admission (10) d'une chambre de combustion (2) du moteur à combustion interne (1) et dans la direction d'une deuxième ouverture d'admission (20) de la chambre de combustion (2), le deuxième agencement d'injection (5) présentant une deuxième soupape d'injection (12) pour l'injection de carburant (6) de la deuxième composition de carburant essentiellement uniquement dans la direction de la première ouverture d'admission (10) et une troisième soupape d'injection séparée (12) pour l'injection de carburant (6) de la deuxième composition de carburant essentiellement uniquement dans la direction de la deuxième ouverture d'admission (20),
**caractérisé en ce que**
les deux ouvertures d'admission (20, 21) sont associées à la même et unique chambre de combustion (2), et
**en ce que** la deuxième et la troisième soupape d'injection (12, 22) sont disposées dans un tube d'admission (9) conduisant à la chambre de combustion (2) et dans une portion de paroi inférieure (40) du tube d'admission (9) tournée vers la chambre de combustion (2), et **en ce que** la première soupape d'injection (7) est disposée dans une portion de paroi supérieure (41) du tube d'admission (9) opposée à la chambre de combustion (2).

2. Dispositif d'injection (1') selon la revendication 1, **caractérisé en ce que** le tube d'admission (9) est séparé entre le deuxième agencement d'injection (5) et la chambre de combustion (2) au moyen d'une paroi de séparation interne (42) en un premier canal d'admission (11) débouchant dans la première ouverture d'admission (10) et un deuxième canal d'admission (21) débouchant dans la deuxième ouverture d'admission (20), la deuxième soupape d'injection (12) étant disposée dans la région du premier canal d'admission (11) et la troisième soupape d'injection (22) étant disposée dans la région du deuxième canal d'admission (21).

3. Dispositif d'injection (1') selon l'une quelconque des revendications précédentes, **caractérisé en ce que** la distance entre la deuxième soupape d'injection (12) et la première ouverture d'admission (10) et la distance entre la troisième soupape d'injection (22) et la deuxième ouverture d'admission (20) sont à chaque fois inférieures à la distance entre la première soupape d'injection (7) et la première ou la deuxième ouverture d'admission (10, 20).

4. Dispositif d'injection (1') selon l'une quelconque des revendications précédentes, **caractérisé en ce que** la deuxième et la troisième soupape d'injection (12, 22) présentent à chaque fois seulement une ouverture d'injection unique (14, 24) pour l'injection du carburant (6) de la deuxième composition de carburant et/ou **en ce que** la deuxième et la troisième soupape d'injection (12, 22) sont à chaque fois dimensionnées pour une plage de débits de carburant inférieure à celle de l'au moins une première soupape d'injection (7).

5. Moteur à combustion interne (1) présentant un dispositif d'injection (1') selon l'une quelconque des revendications précédentes.

6. Procédé pour faire fonctionner un dispositif d'injection (1') selon l'une quelconque des revendications 1 à 4, **caractérisé en ce qu'**au moyen de la première soupape d'injection (7), du carburant (4) de la première composition de carburant à base de gaz naturel est injecté à la fois dans la direction de la première ouverture d'admission (10) et dans la direction de la deuxième ouverture d'admission (20) et **en ce qu'**au moyen de la deuxième soupape d'injection (12), du carburant (6) de la deuxième composition de carburant à base d'essence est injecté essentiellement uniquement dans la direction de la première ouverture d'admission (10) et au moyen de la troisième soupape d'injection (22), du carburant (6) de la deuxième composition de carburant est injecté essentiellement uniquement dans la direction de la deuxième ouverture d'admission (20).

7. Procédé selon la revendication 6, **caractérisé en ce qu'**avec l'au moins une première soupape d'injection (7), exclusivement du carburant (4) de la première composition de carburant est injecté, et **en ce qu'**avec la deuxième et la troisième soupape d'injection (12, 22), à chaque fois exclusivement du carburant (6) de la deuxième composition de carburant est injecté.

8. Procédé selon l'une quelconque des revendications 6 ou 7, **caractérisé en ce que** dans une phase de démarrage du moteur à combustion interne (1), principalement du carburant (6) de la deuxième composition est injecté par la deuxième et la troisième soupape d'injection (12, 22) et **en ce que** dans une phase de charge du moteur à combustion interne (1), principalement du carburant (4) de la première composition est injecté par la première soupape d'injection (7).
